# EUROPÄISCHE PATENTANMELDUNG

(11) **EP 4 825 759 A1**
(43) Veröffentlichungstag der Anmeldung: **21.10.2026**
(21) Anmeldenummer: 26171834.0
(22) Anmeldetag: 13.04.2026
(51) Int. Cl.: B65G 21/20, B65G 15/16

(54) **TRANSPORTSYSTEM FÜR PLÄTTEFÖRIGER WRKSTUKKE**

(30) Priorität: 16.04.2025 DE 102025114910
(71) Anmelder: HOMAG GmbH, 72296 Schopfloch (DE)
(72) Erfinder: Thumm, Michael, 72149 Neustetten (DE)
(74) Vertreter: Hoffmann Eitle

(57) **Zusammenfassung**

Die Erfindung betrifft ein Transportsystem (10) für plattenförmige Werkstücke (11), die bevorzugt zumindest abschnittsweise aus Holz, Holzwerkstoff, Kunststoff oder dergleichen bestehen, aufweisend: eine Transporteinrichtung (13), die mindestens eine Stützfläche (14) zum Stützen eines zu transportierenden Werkstücks (11) aufweist, eine Antriebseinrichtung (15) zum Antreiben der Transporteinrichtung (13) mit einer Transportgeschwindigkeit, um eine Transportbewegung (T) für das zu transportierende Werkstück (11) herbeizuführen, und eine Oberdruckeinrichtung (19), die eingerichtet ist, eine Druckkraft (F) in Richtung der Stützfläche (14) auf das zu transportierende Werkstück (11) aufzubringen, dadurch gekennzeichnet, dass die Oberdruckeinrichtung (19) mehrere Oberdruckschlitten (20) aufweist, die segmentartig entlang der Transporteinrichtung (13) angeordnet sind, wobei die Oberdruckschlitten (20) unabhängig voneinander durch eine zur Stützfläche (14) gerichtete Stellbewegung (S) mit dem Werkstück (11) kontaktierbar sind, um die Druckkraft (F) auf das Werkstück (11) aufzubringen.

## Beschreibung

### Technisches Gebiet

Die Erfindung betrifft ein Transportsystem für plattenförmige Werkstücke.

### Stand der Technik

Aus der DE 10 2021 105 832 A1 ist ein Transportsystem zum Transportieren plattenförmiger Werkstücke bekannt, bei dem die zu transportierenden Werkstücke auf einer Transportauflage aufliegen und während einer Transportbewegung zwischen der Transportauflage und einer Oberdruckeinrichtung eingeklemmt sind. Hierzu weist die Oberdruckeinrichtung eine Vielzahl Kipphebeleinrichtungen auf, die entlang der Transporteinrichtung angeordnet sind, wobei jede Kipphebeleinrichtung eine Andruckrolle umfasst, die durch eine Kippbewegung auf eine Oberseite des Werkstücks aufgesetzt wird. Jede Kipphebeleinrichtung ist durch eine gefederte, mehrgelenkige Kipphebelanordnung gebildet, so dass ein Stellweg der Andruckrollen durch einen Kipphebelweg dieser Kipphebelanordnung begrenzt ist. Aufgrund dieses begrenzten Stellweges können durch eine solche Kipphebeleinrichtung im Wesentlichen Werkstücktoleranzen plattenförmiger Werkstücke ausgleichbar sein, wohingegen der Transport von Werkstücken unterschiedlicher Werkstückdicke jeweils eine entsprechende Einstellung bzw. einen Umbau der Oberdruckeinrichtung erfordert. Diese erhöht jedoch einen Bedieneraufwand und beeinträchtigt aufgrund des Maschinenstillstands signifikant die Auslastung einer dem Transportsystem zugeordneten Bearbeitungsmaschine. Zudem verursacht die Kipphebeleinrichtung sowohl aufgrund eines komplexen mechanischen Aufbaus als auch durch einen intensiveren Wartungsaufwand höhere Kosten.

### Darstellung der Erfindung

Der Erfindung liegt die Aufgabe zugrunde, ein Transportsystem für plattenförmige Werkstücke vorzuschlagen, das einen optimierten Transport plattenförmiger Werkstücke unterschiedlicher Werkstückdicke ermöglicht.

Ein Transportsystem für plattenförmige Werkstücke ist in Anspruch 1 definiert. Unteransprüche beziehen sich auf bestimmte Ausführungsformen.

Die Aufgabe wird durch ein Transportsystem für plattenförmige Werkstücke, die bevorzugt zumindest abschnittsweise aus Holz, Holzwerkstoff, Kunststoff oder dergleichen bestehen, aufweisend eine Transporteinrichtung zum Stützen eines zu transportierenden Werkstücks, eine Antriebseinrichtung zum Antreiben der Transporteinrichtung, um eine Transportbewegung für das zu transportierende Werkstück herbeizuführen, und eine Oberdruckeinrichtung, die eingerichtet ist, eine Druckkraft in Richtung der Stützfläche auf das zu transportierende Werkstück aufzubringen, gelöst, wobei die Oberdruckeinrichtung mehrere Oberdruckschlitten aufweist, die segmentartig entlang der Transporteinrichtung angeordnet sind, und wobei die Oberdruckschlitten unabhängig voneinander durch eine zur Stützfläche gerichtete Stellbewegung mit dem Werkstück kontaktierbar sind, um die Druckkraft auf das Werkstück aufzubringen.

Ein solches Transportsystem ermöglicht einen Transport von plattenförmigen Werkstücken zu einem Bearbeitungsbereich einer Bearbeitungsmaschine, insbesondere einer als Durchlaufmaschine ausgebildeten Bearbeitungsmaschine. Bei der Bearbeitungsmaschine handelt es sich bevorzugt um eine Holzbearbeitungsmaschine zum Ausführen eines beliebigen Bearbeitungsvorgangs am Werkstück, beispielsweise ein Anleimvorgang, Fräsvorgang, Sägevorgang, Kappvorgang, Abziehvorgang wie etwa mit einer Ziehklinge, oder Druckvorgang.

Zum Transport einer Vielzahl aufeinanderfolgender Werkstücke kann die Transporteinrichtung wenigstens ein Endlosumlaufelement aufweisen, vorzugsweise eine Förderkette, einen Förderriemen, ein Förderband oder dergleichen, auf dem die zu transportierenden Werkstücke aufliegen und in einer Transportrichtung relativ zu der Bearbeitungsmaschine transportiert werden. Dabei bewirkt die durch die Oberdruckeinrichtung aufgebracht Druckkraft eine Fixierung der Werkstücke während der Transportbewegung, so dass der Bearbeitungsvorgang am Werkstück präzise durchführbar ist.

Indem die Oberdruckeinrichtung die mehreren Oberdruckschlitten aufweist, die segmentartig entlang der Transporteinrichtung angeordnet sind, wird die Druckkraft aufeinanderfolgend durch einen oder durch mehrere Oberdruckschlitten auf das jeweilige Werkstück aufgebracht, während dieses in der Transportrichtung relativ zu den Oberdruckschlitten transportiert wird. Die Oberdruckschlitten sind insbesondere ausgebildet, dass diese mit dem Werkstück kontaktierbar sind, während das Werkstück die Transportbewegung ausführt.

Indem durch die Oberdruckschlitten unabhängig voneinander die zur Stützfläche gerichtete Stellbewegung ausführbar ist, können durch die Oberdruckeinrichtung eine Vielzahl aufeinanderfolgender Werkstücke unterschiedlicher Werkstückdicke fixierbar sein, ohne dass hierzu eine individuelle Einstellung oder Justierung der Oberdruckeinrichtung erforderlich ist. Dabei ist jeder Oberdruckschlitten durch die unabhängige Stellbewegung auf die entsprechende Werkstückdicke des jeweiligen Werkstücks einstellbar.

Auf diese Weise können durch die Oberdruckeinrichtung Werkstücke fixiert werden, die aufeinanderfolgend voneinander abweichende Werkstückdicken aufweisen. Dabei ist zu berücksichtigen, dass durch denselben Oberdruckschlitten nur ein Werkstück oder mehrere Werkstücke gleicher Werkstückdicke fixierbar ist/sind. Weisen aufeinanderfolgende Werkstücke unterschiedliche Werkstückdicken auf, können diese nicht durch denselben Oberdruckschlitten fixiert werden, sondern es muss eine Werkstücklücke zwischen den unmittelbar aufeinanderfolgenden Werkstücken vorgesehen sein, die zumindest eine Länge des Oberdruckschlitten in der Transportrichtung entspricht.

Da durch die Stellbewegungen der Oberdruckschlitten eine individuelle Einstellung der Oberdruckeinrichtung auf verschiedene Werkstückdicken entfallen kann, kann durch eine solche Oberdruckeinrichtung insbesondere bei der Fertigung von häufig wechselnden Werkstückdimensionen, Einzelstücken, Kleinserien oder dergleichen eine signifikante Steigerung einer Leistung der Bearbeitungsmaschine erreicht werden, da ein Maschinenstillstand aufgrund von Umrüstzeiten verhindert wird.

Eine Weiterbildung des Transportsystems kann vorsehen, dass jeder Oberdruckschlitten eine Stelleinrichtung aufweist, durch welche die zur Stützfläche gerichtete Stellbewegung des jeweiligen Oberdruckschlittens steuerbar ist.

Die Stelleinrichtung kann sowohl einen gefedert oder elektromagnetisch oder elektromotorischen Antrieb als auch einen pneumatischen oder hydraulischen Antrieb aufweisen. Dabei ist unter der zur Stützfläche gerichteten Stellbewegung des jeweiligen Oberdruckschlittens insbesondere zu verstehen, dass dieser durch das jeweilige zu fixierende Werkstück aus einer Ausgangsposition in eine Klemmposition überführt wird, indem das Werkstück den Oberdruckschlitten durch die Transportbewegung in die Klemmposition drückt, um die Druckkraft auf das Werkstück aufzubringen. Alternativ oder ergänzend kann unter der zur Stützfläche gerichteten Stellbewegung ebenso zu verstehen sein, dass der jeweilige Oberdruckschlitten durch eine gesteuerte Stellbewegung auf das Werkstück, insbesondere auf eine Oberseite des Werkstücks, aufgesetzt wird, um die Druckkraft auf das Werkstück aufzubringen. Die zur Stützfläche gerichtete Stellbewegung der Oberdruckschlitten bezeichnet somit sowohl eine Bewegung der Oberdruckschlitten auf die Stützfläche zu als auch von der Stützfläche weg.

In einer Ausgestaltung des Transportsystems kann jeder Oberdruckschlitten eine Schlittenführung aufweisen, durch die der Oberdruckschlitten mit einer linearen Stellbewegung auf das Werkstück aufsetzbar ist.

Die Schlittenführung bildet insbesondere eine Linearführung für den jeweiligen Oberdruckschlitten. Vorzugsweise ist die Schlittenführung derart ausgebildet, dass die lineare Stellbewegung der Oberdruckschlitten im Wesentlichen senkrecht zur Stützfläche der Transporteinrichtung ausführbar ist.

Eine vorteilhafte Ausgestaltung des Transportsystems kann zudem vorsehen, dass durch die Oberdruckschlitten jeweils ein Schlittenhub von wenigstens 5 mm, bevorzugt wenigstens 10 mm, weiter bevorzugt wenigstens 20 mm, weiter bevorzugt wenigstens 60 mm, ausführbar ist.

Insbesondere ist die Stelleinrichtung und/oder die Schlittenführung derart eingerichtet, dass die Oberdruckschlitten jeweils mit einem Schlittenhub von wenigstens 5 mm, bevorzugt wenigstens 10 mm, weiter bevorzugt wenigstens 20 mm, weiter bevorzugt wenigstens 60 mm, bewegbar sind.

Indem durch die Oberdruckschlitten eine Stellbewegung mit einem solchen Schlittenhub ausführbar ist, können durch die Oberdruckeinrichtung Werkstücke in einem großen Bereich verschiedener Werkstückdicken auf der Transporteinrichtung fixiert werden. Beispielsweise können durch die Oberdruckschlitten mit einem solchen Schlittenhub Werkstücke mit Werkstückdicken von 16 mm, 19 mm, 23 mm oder größer aufeinanderfolgend fixierbar sein.

In einer Ausgestaltung des Transportsystems können die mehreren Oberdruckschlitten in Reihe entlang der Transportbewegung der Transporteinrichtung angeordnet sein.

Vorzugsweise sind die mehreren Oberdruckschlitten entlang der Transportrichtung der Transporteinrichtung in einer Reihe hintereinander liegend angeordnet. Auf diese Weise wird das durch die Transporteinrichtung in der Transportrichtung transportierte Werkstück nacheinander durch die in Reihe hintereinanderliegend angeordneten Oberdruckschlitten auf der Transporteinrichtung fixiert. Mit anderen Worten, das Werkstück wird in der Transportrichtung von einem Oberdruckschlitten zum nächsten Oberdruckschlitten übergeben, wobei mehrere benachbarte Oberdruckschlitten gleichzeitig das Werkstück kontaktieren können, um die Druckkraft auf dieses aufzubringen.

Eine vorteilhafte Weiterbildung des Transportsystems kann zudem vorsehen, dass die Oberdruckschlitten jeweils ein Endlosumlaufelement aufweisen, um die Druckkraft während der Transportbewegung auf das Werkstück aufzubringen. Das Endlosumlaufelement ist vorzugsweise durch eine Führungseinheit des jeweiligen Oberdruckschlittens in einer Umlaufrichtung geführt, sodass eine geführte Umlaufbewegung durch das Endlosumlaufelement ausführbar ist.

Mit dem Endlosumlaufelement ist der jeweilige Oberdruckschlitten auf einer Oberseite des Werkstücks aufsetzbar. Vorzugsweise ist die Umlaufbewegung des Endlosumlaufelements an die Transportrichtung der Transporteinrichtung angepasst und mit der Transportbewegung der Transporteinrichtung synchronisiert, um gleichzeitig die Transportbewegung des Werkstücks und das Aufbringen der Druckkraft zu ermöglichen. Vorteilhaft ist das Endlosumlaufelement als ein Oberdruckriemen, insbesondere als ein Zahnriemen, ein Flachriemen oder dergleichen, ausgebildet. Durch die Verwendung eines Zahnriemens oder Flachriemens können enge Biegeradien realisierbar sein, um diese an den jeweiligen Oberdruckschlitten vorzusehen. Alternativ kann ebenso vorgesehen sein, dass das Endlosumlaufelement als ein Keilriemen, eine Förderkette oder dergleichen ausgebildet ist.

In einer weiteren vorteilhaften Weiterbildung des Transportsystems können die Oberdruckschlitten jeweils mehrere Andruckelemente aufweisen, um die Druckkraft während der Transportbewegung auf das Werkstück aufzubringen.

Vorteilhaft sind die mehreren Andruckelemente als Andruckrollen, Andruckkugeln und/oder dergleichen ausgebildet. Mit den mehreren Andruckelementen ist der jeweilige Oberdruckschlitten auf die Oberseite des Werkstücks aufsetzbar. Beispielsweise können an einem Oberdruckschlitten zwei oder mehr, bevorzugt fünf oder mehr, weiter bevorzugt zehn oder mehr, Andruckelemente angeordnet sein.

Eine Ausgestaltung des Transportsystems kann zudem vorsehen, dass die Andruckelemente in Richtung der Transportbewegung der Transporteinrichtung versetzt zueinander an dem jeweiligen Oberdruckschlitten angeordnet sind.

Vorzugsweise sind die versetzt zueinander angeordneten Andruckelemente in der Transportrichtung mit einem Achsabstand zueinander beabstandet, der mindestens einem Viertel des Durchmessers der Andruckelemente und höchstens einem Ganzen Durchmesser der Andruckelemente entspricht. Vorteilhaft können die versetzt zueinander angeordneten Andruckelemente in der Transportrichtung mit einem Achsabstand zueinander angeordnet sein, der etwa einem halben Durchmesser der Andruckelemente entspricht.

In einer weiteren Ausgestaltung des Transportsystems können die Oberdruckschlitten jeweils eine pneumatische und/oder hydraulische Andruckeinrichtung aufweisen, um die Druckkraft während der Transportbewegung auf das Werkstück aufzubringen.

Weist der Oberdruckschlitten eine pneumatische Andruckeinrichtung auf, kann diese beispielsweise als eine Luftkisseneinrichtung oder dergleichen ausgebildet sein. Durch eine solche Luftkisseneinrichtung kann ein besonders oberflächenschonendes Aufbringen der Druckkraft auf das Werkstück erreicht sein, um die Werkstückoberfläche effektiv vor Beschädigungen zu schützen.

Eine Weiterbildung des Transportsystems kann zudem vorsehen, dass die Oberdruckschlitten jeweils eine Antriebseinrichtung aufweisen, die das jeweilige Endlosumlaufelement und/oder die jeweiligen Andruckelemente und/oder die jeweilige pneumatische und/oder hydraulische Andruckeinrichtung antreibt.

Die Antriebseinrichtung kann insbesondere einen elektrischen Motor umfassen, der die Umlaufbewegung des Endlosumlaufelements und/oder der Andruckrollen bzw. Andruckkugeln und/oder die pneumatische bzw. hydraulische Andruckeinrichtung antreibt. Vorteilhaft ist die jeweilige Antriebseinrichtung in den entsprechenden Oberdruckschlitten integriert.

In einer Ausgestaltung des Transportsystems können die Oberdruckschlitten ein gemeinsames Endlosumlaufelement aufweisen und die Druckkraft kann durch die unabhängige Stellbewegung eines oder mehrerer Oberdruckschlitten auf das zu transportierende Werkstück aufbringbar sein, wobei das gemeinsame Endlosumlaufelement durch Führungseinheiten der jeweiligen Oberdruckschlitten in der Umlaufrichtung geführt ist.

Die Oberdruckschlitten sind unabhängig voneinander über das gemeinsame Endlosumlaufelement auf die Oberseite des Werkstücks aufsetzbar. Dabei ist die Umlaufbewegung des gemeinsamen Endlosumlaufelements bevorzugt an die Transportrichtung der Transporteinrichtung angepasst und mit der Transportbewegung der Transporteinrichtung synchronisiert. Vorteilhaft ist das gemeinsame Endlosumlaufelement als ein Oberdruckriemen, insbesondere als ein Zahnriemen, ein Flachriemen oder dergleichen, ausgebildet. Alternativ kann ebenso vorgesehen sein, dass das gemeinsame Endlosumlaufelement als ein Keilriemen, eine Förderkette oder dergleichen ausgebildet ist. Zum Antreiben des gemeinsamen Endlosumlaufelements weist die Oberdruckeinrichtung vorteilhaft eine zentrale Antriebseinrichtung auf, welche die Umlaufbewegung des gemeinsamen Endlosumlaufelements antreibt. Die Antriebseinrichtung umfasst insbesondere einen elektrischen Antriebsmotor. Die Führungseinheiten an den Oberdruckschlitten können beispielsweise als Gleitschienen ausgebildet sein, um das gemeinsame Endlosumlaufelement in der Transportrichtung der Transporteinrichtung auszurichten.

Eine vorteilhafte Weiterbildung des Transportsystems kann zudem vorsehen, dass den Oberdruckschlitten eine Längenkompensationseinrichtung zugeordnet ist, durch die in Abhängigkeit von der Verfahrbewegung eines Oberdruckschlittens oder mehrerer Oberdruckschlitten eine Längenkompensation für das Endlosumlaufelement steuerbar ist.

Insbesondere ist die Längenkompensationseinrichtung durch eine Umlenkeinrichtung gebildet. Dabei kann bevorzugt jeweils eine Umlenkung zwischen zwei benachbarten Oberdruckschlitten vorgesehen sein. Vorteilhaft ist die Umlenkung durch eine Umlenkrolle gebildet, die zwischen zwei benachbarten Oberdruckschlitten angeordnet ist und die in einer Stellrichtung derart verstellbar ist, dass die Längenkompensation für das Endlosumlaufelement steuerbar ist.

### Kurze Beschreibung der Zeichnungen

Weitere Merkmale und Vorteile einer Vorrichtung, einer Verwendung und/oder eines Verfahrens ergeben sich aus der nachfolgenden Beschreibung von Ausführungsformen unter Bezugnahme auf die beiliegenden Zeichnungen. Von diesen Zeichnungen zeigt:
- Fig. 1: eine schematische Seitenansicht einer ersten Ausführungsform eines offenbarungsgemäßen Transportsystems zum Transportieren plattenförmiger Werkstücke;
- Fig. 2: eine schematische Detailansicht eines Oberdruckschlittens des Transportsystems in Fig. 1;
- Fig. 3: eine schematische Seitenansicht einer zweiten Ausführungsform des Transportsystems zum Transportieren plattenförmiger Werkstücke;
- Fig. 4: eine schematische Detailansicht eines Oberdruckschlittens des Transportsystems in Fig. 3;
- Fig. 5: eine schematische Seitenansicht einer dritten Ausführungsform des Transportsystems zum Transportieren plattenförmiger Werkstücke;

### Beschreibung von Ausführungsformen

Gleiche Bezugszeichen, die in verschiedenen Figuren aufgeführt sind, benennen identische, einander entsprechende, oder funktionell ähnliche Elemente.

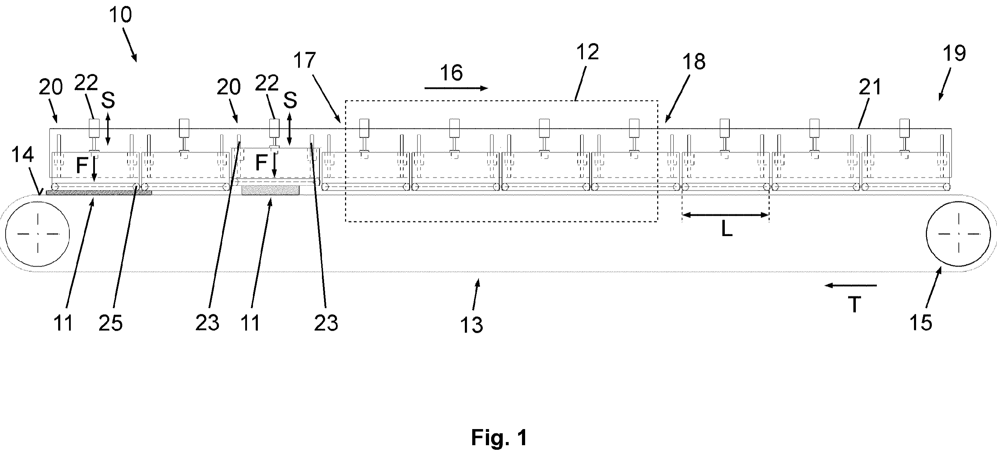

Fig. 1 zeigt eine schematische Seitenansicht einer ersten Ausführungsform eines offenbarungsgemäßen Transportsystems 10 zum Transportieren plattenförmiger Werkstücke 11.

Das Transportsystem 10 ist insbesondere ausgebildet, um mehrere plattenförmige Werkstücke 11 aufeinanderfolgend einem Arbeitsbereich 12 einer nicht näher dargestellten Bearbeitungsmaschine zuzuführen und die Werkstücke 11 nach dem Durchführen eines Bearbeitungsvorgangs aus dem Arbeitsbereich 12 der Bearbeitungsmaschine wieder abzuführen. Der Bearbeitungsvorgang kann dabei bevorzugt während einer Transportbewegung der Werkstücke 11 ausgeführt werden. Die Bearbeitungsmaschine bildet somit eine Durchlaufmaschine. Vorzugsweise handelt es sich bei der Bearbeitungsmaschine um eine Holzbearbeitungsmaschine.

Das Transportsystem 10 umfasst eine Transporteinrichtung 13, die eine Stützfläche 14 bildet, auf der die Werkstücke 11 zum Transportieren abgestützt sind. Die Transporteinrichtung 13 umfasst eine Antriebseinrichtung 15, durch welche eine Transportbewegung T mit einer steuerbaren Transportgeschwindigkeit angetrieben wird. Durch die Transportbewegung T der Transporteinrichtung 13 werden die Werkstücke 11 in einer Transportrichtung 16 relativ zu dem Arbeitsbereich 12 der Bearbeitungsmaschine, insbesondere relativ zu wenigstens einem Bearbeitungsaggregat der Bearbeitungsmaschine, transportiert.

Die Transporteinrichtung 13 ist vorteilhaft als ein Endlosumlaufförderer ausgebildet, bei dem die Werkstücke 11 während der Transportbewegung T auf einem umlaufenden Förderband, einem umlaufenden Förderriemen, einer umlaufenden Förderkette oder dergleichen aufliegen. Alternativ kann die Transporteinrichtung 13 ebenso als eine Rollenbahn, eine Kugelrolleneinrichtung, eine Rollenleiste, eine Luftkisseneinrichtung oder dergleichen ausgebildet sein. Die Transporteinrichtung 13 kann eingerichtet sein, die zu transportierenden Werkstücke 11 einem Maschineneinlauf 17 der Bearbeitungsmaschine zuzuführen und aus einem Maschinenauslauf 18 der Bearbeitungsmaschine herauszuführen.

Das Bearbeitungsaggregat der Bearbeitungsmaschine kann zum Ausführen eines beliebigen Bearbeitungsvorgangs an den Werkstücken 11 ausgebildet sein. Beispielsweise kann das Bearbeitungsaggregat als ein Fräsaggregat, Sägeaggregat, Beschichtungsaggregat, Druckaggregat, Ziehklinge und/oder dergleichen ausgebildet sein. Dabei kann ein solches Bearbeitungsaggregat sowohl stationär angeordnet sein als auch eine ein- oder mehrachsige Stellbewegung relativ zu dem Werkstück 11 ausführen, um den Bearbeitungsvorgang auszuführen. Vorteilhaft kann das Bearbeitungsaggregat als ein CNC-gesteuertes Bearbeitungsaggregat ausgebildet sein.

Bei den zu bearbeitenden Werkstücken 11 handelt es sich bevorzugt um Werkstücke, die zumindest abschnittsweise aus Holz, Holzwerkstoff, Kunststoff oder dergleichen bestehen. Insbesondere sind die Werkstücke 11 als plattenförmige Werkstücke ausgebildet. Dabei kann es sich um unterschiedliche Werkstücke 11 handeln, beispielsweise um Massivholz- oder Spanplatten, Leichtbauplatten, Sandwichplatten oder dergleichen. Wie in Fig. 1 dargestellt, können die Werkstücke 11 insbesondere unterschiedliche Werkstückdicken aufweisen, worauf nachfolgend noch näher eingegangen wird. Die vorliegende Erfindung ist jedoch nicht auf derartige Werkstücke 11 beschränkt.

Das Transportsystem 10 umfasst eine Oberdruckeinrichtung 19, die der Transporteinrichtung 13 zugeordnet und oberhalb der Stützfläche 14 der Transporteinrichtung 13 angeordnet ist.

Die Oberdruckeinrichtung 19 ist eingerichtet, eine Werkstückoberseite der zu transportierenden Werkstücke 11 zu kontaktieren und während der Transportbewegung T eine Druckkraft F in Richtung der Stützfläche 14 auf die Werkstücke 11 aufzubringen. Auf diese Weise sind die Werkstücke 11 auf der Stützfläche 14 in einer definierten Position fixiert, so dass eine präzise Bearbeitung ermöglicht ist. Mit anderen Worten, die Werkstücke 11 sind während der Transportbewegung T zwischen der Oberdruckeinrichtung 19 und der Stützfläche 14 eingeklemmt, so dass ein Verrutschen der Werkstücke 11 während dem Ausführen des Bearbeitungsvorgangs verhindert ist.

Die Oberdruckeinrichtung 19 ist durch eine Vielzahl einzelner Oberdruckschlitten 20 gebildet. In der Ausführungsform gemäß Fig. 1 weist die Oberdruckeinrichtung 19 zehn Oberdruckschlitten 20 auf. Es versteht sich, dass die Oberdruckeinrichtung 19 alternativ auch weniger als zehn Oberdruckschlitten 20, beispielsweise fünf Oberdruckschlitten 20, oder mehr als zehn Oberdruckschlitten 20, beispielsweise fünfzehn Oberdruckschlitten 20, aufweisen kann. Die Anzahl der Oberdruckschlitten 20 kann beispielsweise in Abhängigkeit von einer Transportlänge der Transporteinrichtung 13 vorgesehen sein.

Die Oberdruckeinrichtung 19 weist ein Grundgestell 21 auf, an dem die Oberdruckschlitten 20 angeordnet sind. Die Oberdruckschlitten 20 sind segmentartig entlang der Transportrichtung 16 der Transporteinrichtung 13 angeordnet, wobei die Oberdruckschlitten 20 in der Transportrichtung 16 in Reihe hintereinanderliegend angeordnet sind.

Wird ein Werkstück 11 in der Transportrichtung 16 der Transporteinrichtung 13 transportiert, wird die Druckkraft F zunächst durch einen ersten Oberdruckschlitten 20 auf das Werkstück 11 aufgebracht. Mit fortschreitender Transportbewegung T des Werkstücks 11 wird die Druckkraft F durch den jeweils in der Transportrichtung 16 nachfolgenden, d.h. benachbarten, Oberdruckschlitten 20 und/oder die weiteren nachfolgenden Oberdruckschlitten 20 aufgebracht. Dabei kann vorgesehen sein, dass ein Werkstück 11 gleichzeitig durch mehrere benachbarte Oberdruckschlitten 20 kontaktiert wird, um die Druckkraft F auf das Werkstück 11 aufzubringen. Dies kann in Abhängigkeit von einer Werkstücklänge und/oder einer Länge der jeweiligen Oberdruckschlitten 20 abhängig sein. Dieser Fall ist in Fig. 1 dargestellt, bei dem das linke, längere Werkstück 11 durch zwei Oberdruckschlitten 20 kontaktiert ist und das kürzere, rechte Werkstück 11 durch nur einen Oberdruckschlitten 20 kontaktiert ist.

Durch jeden Oberdruckschlitten 20 ist unabhängige voneinander eine Stellbewegungen S ausführbar. Die unabhängig voneinander ausführbare Stellbewegung S der Oberdruckschlitten 20 ermöglicht den Transport von mehreren Werkstücken 11 hintereinander, die unterschiedliche Werkstückdicken aufweisen können, wie in Fig. 1 dargestellt. Die Stellbewegungen S der Oberdruckschlitten 20 ist unabhängig voneinander entsprechend der Werkstückdicke eines zu transportierenden Werkstücks 11 einstellbar. Dabei ist durch einen Oberdruckschlitten 20 jeweils nur ein Werkstück 11 mit einer individuellen Werkstückdicke oder mehrere Werkstücke 11 gleicher Werkstückdicke kontaktierbar. Weisen aufeinanderfolgende Werkstücke 11 unterschiedliche Werkstückdicken auf, können diese nicht durch denselben Oberdruckschlitten 20 kontaktiert werden, sondern erst wenn ein vorderes Werkstück 11 den Kontaktbereich des entsprechenden Oberdruckschlittens 20 verlassen hat, kann dieser die entsprechende Stellbewegung S ausführen, um auf die Werkstückdicke des nachfolgenden Werkstücks 11 eingestellt zu werden.

Vorteilhaft kann die Stellbewegung S durch die Oberdruckschlitten 20 in der Weise ausführbar sein, dass die Werkstücke 11 die jeweiligen Oberdruckschlitten 20 durch die Transportbewegung T aus einer Ruheposition in eine Andruckposition überführen. Insbesondere können die Werkstücke 11 die Oberdruckschlitten 20 durch eine in der Transportrichtung 16 vorauseilenden Werkstückvorderkante aus der Ruheposition in die Andruckposition drücken.

Die Oberdruckschlitten 20 können in Richtung der Transportrichtung 16 der Transporteinrichtung 13 jeweils eine Kontaktlänge L zum Kontaktieren der Werkstücke 11 bilden, die wenigstens 200 mm, bevorzugt wenigstens 500 mm, weiter bevorzugt wenigstens 750 mm, weiter bevorzugt wenigstens 1000 mm, beträgt.

Die Stellbewegung S der Oberdruckschlitten 20 ist dabei zur Stützfläche 14 ausgerichtet. Insbesondere ist die Stellbewegung S der Oberdruckschlitten 20 im Wesentlichen orthogonale zur Stützfläche 14 ausgerichtet. Dabei ist unter der zur Stützfläche 14 gerichteten Stellbewegung S zu verstehen, dass diese sowohl als Stellbewegung S zur Stützfläche 14 hin als auch von der Stützfläche 14 weg ausführbar ist.

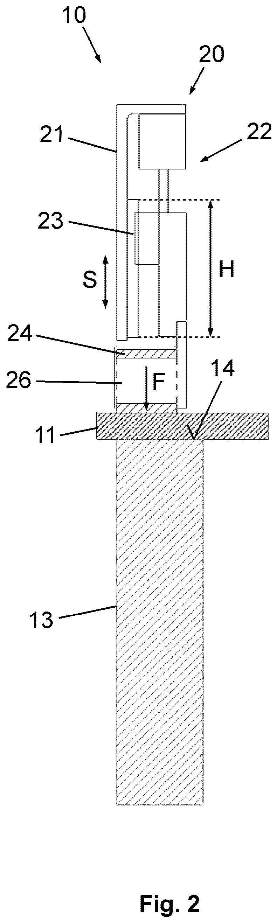

Fig. 2 zeigt eine schematische Detailansicht eines Oberdruckschlittens 20 des Transportsystems 10 in Fig. 1, gesehen in der Transportrichtung 16 der Transporteinrichtung 13.

Jeder Oberdruckschlitten 20 umfasst eine Stelleinrichtung 22, durch welche die Stellbewegung S des jeweiligen Oberdruckschlittens 20 steuerbar ist. Die Stelleinrichtung 22 kann sowohl durch einen pneumatischen oder hydraulischen Antrieb als auch einen elektromotorischen Antrieb gebildet sein.

Die Stelleinrichtung 22 des Oberdruckschlittens 20 umfasst eine Schlittenführung 23, durch welche die Stellbewegung S als eine lineare Verfahrbewegung des Oberdruckschlittens 20 geführt ist. Die Schlittenführung 23 bildet folglich eine Linearführung, die bevorzugt im Wesentlichen orthogonal zur Stützfläche 14 der Transporteinrichtung 13 ausgerichtet ist. Dadurch sind die Stellebewegungen S der Oberdruckschlitten 20 im Wesentlichen orthogonal zur Stützfläche 14 ausführbar.

Durch die Stelleinrichtung 22 ist insbesondere der gesamte Oberdruckschlitten 20 entlang der Schlittenführung 23 bewegbar, um die Stellbewegung S zum Aufbringen der Druckkraft F auf das Werkstück 11 auszuführen.

Durch die Schlittenführung 23 ist ein Schlittenhub H des Oberdruckschlittens 20 zum Ausführen der Stellbewegung S von wenigstens 5 mm, bevorzugt wenigstens 10 mm, weiter bevorzugt wenigstens 20 mm, weiter bevorzugt wenigstens 60 mm, gebildet.

Durch die Oberdruckschlitten 20 der Oberdruckeinrichtung 19 können somit Werkstücke 11 mit einem Unterschied in der Werkstückdicke von wenigstens 5 mm, bevorzugt wenigstens 10 mm, weiter bevorzugt wenigstens 20 mm, weiter bevorzugt wenigstens 60 mm, auf der Stützfläche 14 der Transporteinrichtung 13 fixiert werden. Insbesondere können Werkstücke 11 mit einem Unterschied in deren Werkstückdicke von wenigstens 5 mm, bevorzugt wenigstens 10 mm, weiter bevorzugt wenigstens 20 mm, weiter bevorzugt wenigstens 60 mm, aufeinanderfolgend durch das Transportsystem 10 transportiert werden, ohne die Oberdruckeinrichtung 19 auf unterschiedliche Werkstückdicken, beispielsweise Werkstücke 11 mit Werkstückdicken von 16 mm, 19 mm, 23 mm oder größer, individuell einstellen zu müssen.

Jeder Oberdruckschlitten 20 weist jeweils ein Endlosumlaufelement 24 auf, um die Druckkraft F während der Transportbewegung T des Werkstücks 11 auf das Werkstück 11 aufzubringen. Zum Aufbringen der Druckkraft F wird der jeweilige Oberdruckschlitten 20 mit dem Endlosumlaufelement 24 auf eine Oberseite des jeweiligen Werkstücks 11 aufgesetzt. Hierbei führt das Endlosumlaufelement 24 eine Umlaufbewegung aus, die an die Transportbewegung T der Transporteinrichtung 13 angepasst ist. Dies kann sowohl passiv durch die Transportbewegung T der Werkstücke 11 erfolgen und/oder durch eine Antriebseinrichtung 25, die in den jeweiligen Oberdruckschlitten 20 integriert sein kann, beispielsweise ein Elektromotor. Die Endlosumlaufelemente 24 der Oberdruckschlitten 20 sind entsprechend der Transportrichtung 16 der Transporteinrichtung 13 ausgerichtet, d.h. parallel zu dieser ausgerichtet.

Die Endlosumlaufelemente 24 sind insbesondere als Zahnriemen, Flachriemen oder dergleichen ausgebildet. Mit einem solchen Zahnriemen, Flachriemen oder dergleichen ist ein enger Biegeradius realisierbar, um die Oberdruckschlitten 20 jeweils mit einem Endlosumlaufelement 24 versehen zu können. In einer alternativen Ausführungsform kann ebenso vorgesehen sein, dass die Endlosumlaufelemente 24 als Keilriemen, Förderkette oder dergleichen ausgebildet sind. Die Oberdruckschlitten 20 weisen jeweils eine Führungseinheit 26 auf, durch welche das jeweilige Endlosumlaufelement 24 zum Ausführen der Umlaufbewegung in einer Umlaufrichtung geführt ist. Die Führungseinheiten 26 können als Gleitschiene, Gleitelemente, Rollenelemente oder dergleichen ausgebildet sein.

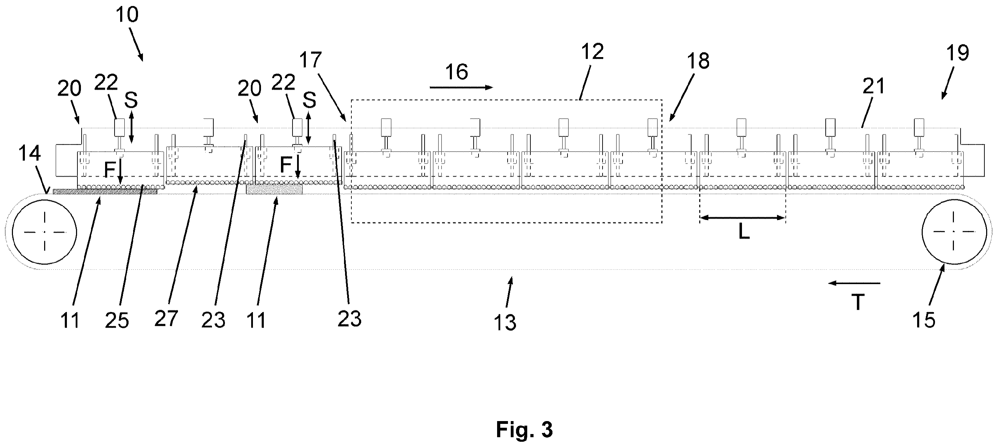

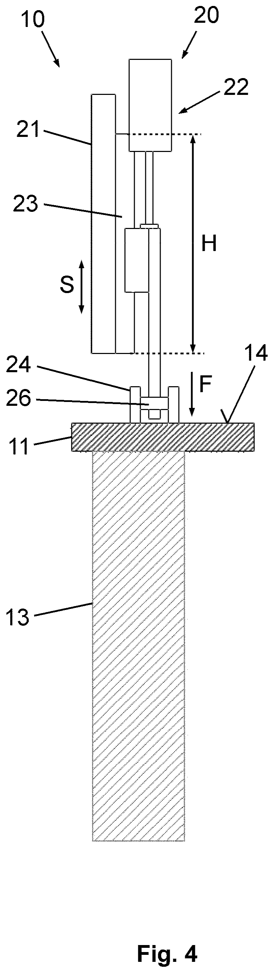

Fig. 3 zeigt eine schematische Seitenansicht einer zweiten Ausführungsform des Transportsystems 10 zum Transportieren plattenförmige Werkstücke und Fig. 4 eine schematische Detailansicht eines Oberdruckschlittens 20 des Transportsystems 10 in Fig. 3.

Nachfolgend wird lediglich auf die Unterschiede dieser zweiten Ausführungsform des Transportsystems 10 eingegangen. Merkmale, die nicht explizit beschrieben werden, entsprechen der vorhergehenden ersten Ausführungsform des Transportsystems 10 gemäß der Fig. 1 und 2.

Bei dieser zweiten Ausführungsform des Transportsystems 10 weist jeder Oberdruckschlitten 20 mehrere Andruckelemente 27 auf, die anstelle des Endlosumlaufelements 24 an dem jeweiligen Oberdruckschlitten 20 vorgesehen sind. Durch die Andruckelemente 27 wird die Druckkraft F während der Transportbewegung T des Werkstücks 11 auf das Werkstück 11 aufgebracht. Die Andruckelemente 27 können beispielsweise als Andruckrollen, Andruckkugeln und/oder dergleichen ausgebildet sein. An jedem Oberdruckschlitten 20 können beispielsweise zwei oder mehr, bevorzugt fünf oder mehr, weiter bevorzugt zehn oder mehr, Andruckelemente 27 angeordnet sein. In der Ausführungsform des Transportsystems 10 gemäß Fig. 3 sind an jedem Oberdruckschlitten 20 beispielhaft achtzehn Andruckelemente 27 vorgesehen.

Die Andruckelemente 27 können sowohl passiv durch die Transportbewegung T der Werkstücke 11 bewegt werden und/oder durch eine Antriebseinrichtung, die in den jeweiligen Oberdruckschlitten 20 integriert sein kann, beispielsweise durch einen Elektromotor. Eine Drehrichtung der Andruckelemente 27 der Oberdruckschlitten 20 ist entsprechend der Transportrichtung 16 der Transporteinrichtung 13 ausgerichtet, d.h. parallel zu dieser ausgerichtet.

Vorteilhaft sind die Andruckelemente 27, insbesondere die als Andruckrollen oder Andruckkugeln ausgebildeten Andruckelemente 27, an einem Oberdruckschlitten 20 in der Transportrichtung 16 der Transporteinrichtung 13 versetzt zueinander angeordnet. Dabei können die Andruckelemente 27 in der Transportrichtung 16 mit einem Achsabstand der jeweiligen Andruckelemente 27 zueinander angeordnet sein, der mindestens einem Viertel des Durchmessers der Andruckelemente 27 und höchstens einem Ganzen Durchmesser der Andruckelemente 27 entspricht. Vorzugsweise sind die Andruckelemente 27, insbesondere die als Andruckrollen oder Andruckkugeln ausgebildeten Andruckelemente 27, in der Transportrichtung 16 mit einem Achsabstand zueinander angeordnet, der etwa einem halben Durchmesser der Andruckelemente 27 entspricht.

In einer alternativen nicht näher dargestellten Ausführungsform des Transportsystems 10 kann an den Oberdruckschlitten 20 anstelle des Endlosumlaufelements 24 oder anstelle der mehreren Andruckelemente 27 jeweils eine pneumatische und/oder hydraulische Andruckeinrichtung vorgesehen sein, die eine pneumatische und/oder hydraulische Druckkraft F während der Transportbewegung T auf das jeweilige Werkstück 11 aufbringt. Eine solche pneumatische Andruckeinrichtung kann beispielsweise als eine ein Luftkissen ausbildende pneumatische Einrichtung gebildet sein.

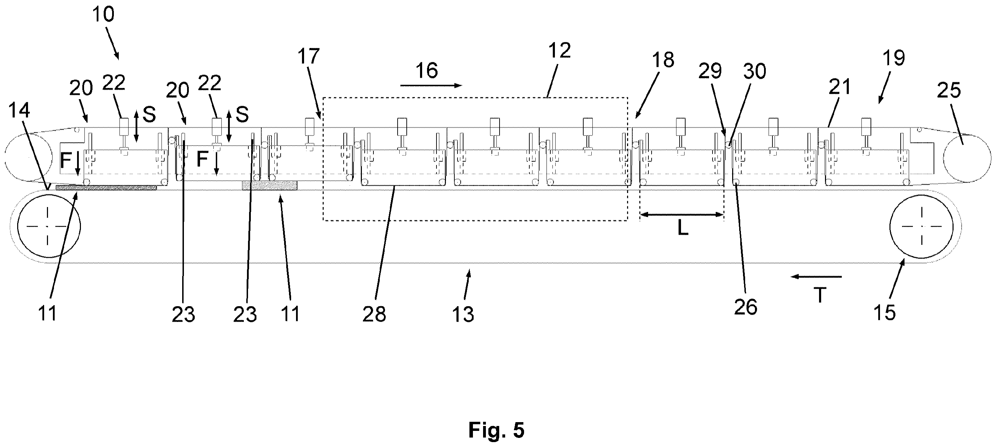

Fig. 5 zeigt eine schematische Seitenansicht einer dritten Ausführungsform des Transportsystems 10 zum Transportieren plattenförmiger Werkstücke 11.

Nachfolgend wird lediglich auf die Unterschiede dieser dritten Ausführungsform des Transportsystems 10 eingegangen. Merkmale, die nicht explizit beschrieben werden, entsprechen den vorhergehenden Ausführungsformen des Transportsystems 10 gemäß der Fig. 1 bis 4.

Bei dieser dritten Ausführungsform des Transportsystems 10 weisen die Oberdruckschlitten 20 ein gemeinsames Endlosumlaufelement 28 auf. Hierbei wird die Druckkraft F während der Transportbewegung T der Werkstücke 11 durch die unabhängige Stellbewegung S eines oder mehrerer Oberdruckschlitten 20 auf die Werkstücke 11 aufgebracht, wobei an den Oberdruckschlitten 20 das eine gemeinsame Endlosumlaufelement 28 geführt ist. Das heißt, die Oberdruckschlitten 20 sind unabhängig voneinander über das gemeinsame Endlosumlaufelement 28 auf die Oberseiten der jeweiligen Werkstücke 11 aufsetzbar. Das gemeinsame Endlosumlaufelement 28 ist durch Führungseinheiten 26, beispielsweise Gleitschienen, Gleitelemente, Führungsrollen oder dergleichen, an den jeweiligen Oberdruckschlitten 20 in der Umlaufrichtung geführt. Bevorzugt ist das gemeinsame Endlosumlaufelement 28 als ein Oberdruckriemen, insbesondere ein Zahnriemen, ein Flachriemen oder dergleichen, ausgebildet. Alternativ kann das gemeinsame Endlosumlaufelement 28 ebenso als ein Keilriemen, eine Förderkette oder dergleichen ausgebildet sein. Durch eine zentrale Antriebseinrichtung 25 kann die Umlaufbewegung des gemeinsamen Endlosumlaufelements 28 angetrieben werden.

Da aufgrund der unabhängigen Stellbewegungen S der Oberdruckschlitten 20 Spannungsänderungen in dem gemeinsamen Endlosumlaufelement 28 auftreten, weist die Oberdruckeinrichtung 19 eine Längenkompensationseinrichtung 29 auf. Durch diese wird in Abhängigkeit von den Stellbewegungen S der Oberdruckschlitten 20 eine Längenkompensation für das Endlosumlaufelement 28 gesteuert.

Die Längenkompensationseinrichtung 29 ist durch mehrere Umlenkeinrichtungen 30 gebildet, die jeweils zwischen benachbarten Oberdruckschlitten 20 angeordnet sind. Insbesondere umfasst jede Umlenkeinrichtung 30 eine verstellbare Umlenkrolle, die zwischen zwei benachbarten Oberdruckschlitten 20 angeordnet ist und über welche das gemeinsame Endlosumlaufelement 28 geführt ist. Die Umlenkeinrichtung 30, d.h. die Umlenkrollen, sind in Abhängigkeit von der Stellbewegung S des jeweiligen Oberdruckschlittens 20 verstellbar, um die aufgrund der Stellbewegung S der Oberdruckschlitten 20 auftretende Spannungsänderung des Endlosumlaufelements 28 zu kompensieren.

Es ist für den Fachmann ersichtlich, dass einzelne, jeweils in verschiedenen Ausführungsformen beschriebene Merkmale auch in einer einzigen Ausführungsform umgesetzt werden können, sofern sie nicht strukturell inkompatibel sind. Gleichermaßen können verschiedene Merkmale, die im Rahmen einer einzelnen Ausführungsform beschrieben sind, auch in mehreren Ausführungsformen einzeln oder in jeder geeigneten Unterkombination vorgesehen sein.

## Patentansprüche

1. Transportsystem (10) für plattenförmige Werkstücke (11), die bevorzugt zumindest abschnittsweise aus Holz, Holzwerkstoff, Kunststoff oder dergleichen bestehen, aufweisend:
eine Transporteinrichtung (13), die mindestens eine Stützfläche (14) zum Stützen eines zu transportierenden Werkstücks (11) aufweist,
eine Antriebseinrichtung (15) zum Antreiben der Transporteinrichtung (13) mit einer Transportgeschwindigkeit, um eine Transportbewegung (T) für das zu transportierende Werkstück (11) herbeizuführen, und
eine Oberdruckeinrichtung (19), die eingerichtet ist, eine Druckkraft (F) in Richtung der Stützfläche (14) auf das zu transportierende Werkstück (11) aufzubringen, **dadurch gekennzeichnet, dass**
die Oberdruckeinrichtung (19) mehrere Oberdruckschlitten (20) aufweist, die segmentartig entlang der Transporteinrichtung (13) angeordnet sind, wobei die Oberdruckschlitten (20) unabhängig voneinander durch eine zur Stützfläche (14) gerichtete Stellbewegung (S) mit dem Werkstück (11) kontaktierbar sind, um die Druckkraft (F) auf das Werkstück (11) aufzubringen.

2. Transportsystem nach Anspruch 1, bei dem ferner jeder Oberdruckschlitten (20) eine Stelleinrichtung (22) aufweist, durch welche die zur Stützfläche (14) gerichtete Stellbewegung (S) des jeweiligen Oberdruckschlittens (20) steuerbar ist.

3. Transportsystem nach Anspruch 1 oder 2, bei dem ferner jeder Oberdruckschlitten (20) eine Schlittenführung (23) aufweist, durch die der Oberdruckschlitten (20) mit einer linearen Stellbewegung (S) auf das Werkstück (11) aufsetzbar ist.

4. Transportsystem nach einem der vorhergehenden Ansprüche, bei dem ferner durch die Oberdruckschlitten (20) jeweils ein Schlittenhub (H) von wenigstens 5 mm, bevorzugt wenigstens 10 mm, weiter bevorzugt wenigstens 20 mm, weiter bevorzugt wenigstens 60 mm, ausführbar ist.

5. Transportsystem nach einem der vorhergehenden Ansprüche, bei dem ferner die mehreren Oberdruckschlitten (20) in Reihe entlang der Transportbewegung (T) der Transporteinrichtung (13) angeordnet sind.

6. Transportsystem nach einem der vorhergehenden Ansprüche, bei dem ferner die Oberdruckschlitten (20) jeweils ein Endlosumlaufelement (24) aufweisen, um die Druckkraft (F) während der Transportbewegung (T) auf das Werkstück (11) aufzubringen, wobei das Endlosumlaufelement (24) durch eine Führungseinheit (26) des jeweiligen Oberdruckschlittens (20) in einer Umlaufrichtung geführt ist.

7. Transportsystem nach einem der vorhergehenden Ansprüche, bei dem ferner die Oberdruckschlitten (20) jeweils mehrere Andruckelemente (27) aufweisen, vorzugsweise Andruckrollen, Andruckkugeln und/oder dergleichen, um die Druckkraft (F) während der Transportbewegung (T) auf das Werkstück (11) aufzubringen.

8. Transportsystem nach Anspruch 7, bei dem ferner die Andruckelemente (27) in Richtung der Transportbewegung (T) der Transporteinrichtung (13) versetzt zueinander an dem jeweiligen Oberdruckschlitten (20) angeordnet sind, vorzugsweise mit einem Achsabstand von mindestens einem Viertel des Durchmessers der Andruckelemente (27) und höchstens einem Ganzen Durchmesser der Andruckelemente (27).

9. Transportsystem nach einem der vorhergehenden Ansprüche, bei dem ferner die Oberdruckschlitten (20) jeweils eine pneumatische und/oder hydraulische Andruckeinrichtung aufweisen, vorzugsweise eine Luftkisseneinrichtung oder dergleichen, um die Druckkraft (F) während der Transportbewegung (T) auf das Werkstück (11) aufzubringen.

10. Transportsystem nach einem der Ansprüche 6 bis 9, bei dem ferner die Oberdruckschlitten (20) jeweils eine Antriebseinrichtung (25) aufweisen, die das jeweilige Endlosumlaufelement (24) und/oder die jeweiligen Andruckelemente (27) und/oder die jeweilige pneumatische und/oder hydraulische Andruckeinrichtung antreibt.

11. Transportsystem nach einem der vorhergehenden Ansprüche, bei dem ferner die Oberdruckschlitten (20) ein gemeinsames Endlosumlaufelement (28) aufweisen und die Druckkraft (F) durch die unabhängige Stellbewegung (S) eines oder mehrerer Oberdruckschlitten (20) auf das zu transportierende Werkstück (11) aufbringbar ist, wobei das gemeinsame Endlosumlaufelement (28) durch Führungseinheiten (26) der jeweiligen Oberdruckschlitten (20) in der Umlaufrichtung geführt ist.

12. Transportsystem nach Anspruch 11, bei dem ferner den Oberdruckschlitten (20) eine Längenkompensationseinrichtung (29), vorzugsweise eine Umlenkeinrichtung (30), zugeordnet ist, durch die in Abhängigkeit von der Stellbewegung eines Oberdruckschlittens (20) eine Längenkompensation für das Endlosumlaufelement (28) steuerbar ist.
